(19) Europäisches Patentamt
European Patent Office
Office européen des brevets

(11) Publication number: 0 265 275 A2

(12) # EUROPEAN PATENT APPLICATION

(21) Application number: 87309380.1

(22) Date of filing: 23.10.87

(51) Int. Cl.[4]: **C 08 L 67/02**
C 08 L 51/06
//(C08L67/02,5:06,67:02),
(C08L51/06,67:02,67:02)

(30) Priority: 24.10.86 US 922581

(43) Date of publication of application:
27.04.88 Bulletin 88/17

(84) Designated Contracting States:
AT BE CH DE ES FR GB GR IT LI LU NL SE

(71) Applicant: CELANESE ENGINEERING RESINS, INC.
26 Main Street
Chatham, New Jersey (US)

(72) Inventor: Yu, Thomas C.
54 Susan Drive
Chatham New Jersey (US)

(74) Representative: De Minvielle-Devaux, Ian Benedict Peter et al
CARPMAELS & RANSFORD 43, Bloomsbury Square
London WC1A 2RA (GB)

(54) **High impact polyarylate compositions.**

(57) Polyarylates are modified to achieve ductile failure during practical impact without adversely effecting the high peak force by mixing the polyarylate with a polyester derived from an aliphatic or cycloaliphatic diol and an aromatic dicarboxylic acid and an impact modifier comprising an EPDM elastomer. To reduce notch sensitivity of the above composition, inclusion of a second impact modifier comprising an acrylic multiphase interpolymer is required.

EP 0 265 275 A2

**Description**

## HIGH IMPACT POLYARYLATE COMPOSITIONS

### BACKGROUND OF THE INVENTION

This invention is directed to polyarylate molding compositions having improved impact performance, and to molding powders and molded articles of such improved impact polyesters. More particularly, this invention is concerned with thermoplastic polyarylates in which the impact performance is improved by the addition of an impact modifier comprising an unsaturated elastomeric copolymer for practical impact and an acrylic multiphase interpolymer for improvement of notched izod impact.

Linear aromatic polyesters prepared from dicarboxylic acids, especially from aromatic dicarboxylic acids and bisphenols as well known for their suitability for molding, extrusion, casting, and film-forming applications. For example, U.S. Patent No. 3,216,970 to Conix, discloses linear aromatic polyesters prepared from isophthalic acid, terephthalic acid, and a bisphenolic compound. Such high molecular weight compositions are known to be useful in the preparation of various films and fibers. Further, these compositions, when molded into useful articles using conventional techniques, provide properties superior to articles molded from other linear polyester compositions. For instance, aromatic polyesters are known to have a variety of useful properties, such as good tensile, impact, and bending strengths, high thermal deformation and thermal decomposition temperatures, resistance to UV irradiation and good electrical properties.

In terms of their thermal and mechanical properties, polyarylates are comparable to other high performance thermoplastic polymers, such as polycarbonates. However, although the polyarylates show high peak force during practical impact, an undesirable brittle mode of failure is noticed. Thus, it would be desirable to modify polyarylates to achieve ductile failure without essentially effecting the other mechanical properties including the maintenance of the high peak force during practical impact shown by polyarylates.

The impact properties of polymers have been increased by the addition of impact modifiers. A wide variety of impact modifiers, based on rubbers of polybutadiene, butadiene-styrene copolymers, etc., as well as hydrocarbon based elastomers have been suggested as additives to thermoplastic polymers to increase the impact properties of thermoplastic polymers in general, and polyvinylchloride, in particular. Although, polyarylates have a higher molding temperature than polyvinylchloride, impact modifiers for polyvinylchloride have been widely suggested for altering the impact properties of polyarylates even though it would be expected that such impact modifiers would degrade at the high molding temperatures of polyarylates.

For example, U.S. Patent No. 3,792,118 discloses a composition comprising 1 to 95% by weight of a styrene resin and about 99 to 5% by weight of a polyarylene ester. The styrene resin is disclosed as a polystyrene copolymer which can include copolymerizing styrene, acrylonitrile, and/or methyl methacrylate to one of several rubbery high polymers. Among the rubbery polymers disclosed is a rubbery copolymer of ethylene, propylene, and diene or polybutadiene.

U.S. Patent No. 4,231,922 is specifically directed to improving the notched izod impact values of polyarylate molding compositions by the addition of a polyester derived from an aliphatic diol and an aromatic dicarboxylic acid and an impact modifier thereto. The impact modifiers disclosed as suitable for the invention comprise graft copolymers of a vinyl aromatic, an acrylate, and unsaturated nitrile, or mixtures thereof, grafted onto an unsaturated elastomeric backbone and having a tensile modulus of less than 100,000 psi. The disclosed unsaturated elastomeric backbones comprise polybutadiene, poly(butadiene-co-styrene), poly(butadiene-co-acrylonitrile), or poly(isopropene).

U.S. Patent No. 4,239,677 discloses a molding composition comprising a polyester which can include a block copolyester of poly(1,4-butylene terephthalate) and an aromatic/aliphatic or aliphatic polyester and an impact modifier comprising a combination of a linear or branched rubbery polyester end blocked copolymer of a vinyl aromatic and a conjugated diene and/or a polyester end blocked homopolymer of a conjugated diene or vinyl aromatic; and an aromatic polycarbonate resin.

U.S. Patent No. 4,281,079 also discloses improving the impact resistance of polyarylene esters by incorporating impact modifiers comprising an elastomeric ethylene 1-alkene copolymer such as ethylene and propylene or 1-butene. The ethylene copolymer may include a diolefin monomer which introduces unsaturated side groups. Among the diolefins disclosed are $C_5$ to $C_{10}$ nonconjugated dienes containing isolated double bonds.

One particular type of impact modifier which has been suggested for thermoplastic polymers and is of use in the present invention as will be later explained in more detail is a multiphase composite interpolymer, designated "Acryloid" and marketed by Rohm and Haas Company, Philadelphia, Pa., for use as an impact modifier for polyesters, polyvinylchlorides and nylons. The following three patents disclose "Acryloid" impact modifiers.

U.S. Patent No. 4,096,202 of Farnham et al specifically discloses the use of a multiphase composite interpolymer as an impact modifier for polyalkylene terephthalate, i.e. thermoplastic polyesters. The multiphase composite interpolymer is described as a cross-linked acrylic first stage containing a graft-linking monomer and a final rigid thermoplastic phase. According to Rohm and Haas Company, the multiphase composite polymer described in this patent is designated commercially as Acryloid KM-330. This patent is herein incorporated by reference.

U.S. Patent No. 4,034,013 also discloses a composition of an impact modifier for polyalkylene terephthalates wherein the impact modifier comprises a multi-stage polymer having a rubbery first stage and an epoxy functional hard final stage. The rubbery polymer suitable for the core or first stage includes polymers of one or more of butadiene or acrylates. The first stage monomer can include a graft linking monomer and a cross linking monomer.

U.S. Patent No. 4,180,494 discloses a high impact and solvent resistant composition comprising (A) about 25% to 95% by weight of an aromatic polyester, (B) about 1% to 8% by weight of an aromatic polycarbonate, and (C) and balance a core shell polymer having a butadiene-based core, a second stage polymerized from styrene and a final stage or shell polymerized from methyl methacrylate and 1,3-butylene glycol dimethacrylate. Among the preferred aromatic polyesters (A) is mentioned Bisphenol A isophthalate.

Thus, while it is known to incorporate impact modifiers into polyarylate molding compositions, there still is a need to improve the impact properties of polyarylates such as to improve the undesirable brittle mode of failure of polyarylate resins without reducing the impact strength of the resin.

## SUMMARY OF THE INVENTION

Accordingly, it has now been found that polyarylates can achieve ductile failure without sacrificing impact strength by blending the polyarylate and a polyester derived from an aliphatic or cycloaliphatic diol, or mixtures thereof, and an aromatic dicarboxylic acid with an impact modifier which is a graft copolymer of a vinyl aromatic, an acrylate, an unsaturated nitrile or mixtures thereof, grafted onto an unsaturated backbone comprising an EPDM rubber (ethylene-propylene-butadiene rubber). Additional impact strength improvement is achieved by adding to the blend of polyarylate, polyester and EPDM rubber, less than about 10 wt.% of a multiphase composite interpolymer comprising a first elastomeric phase and a final rigid thermoplastic stage such as heretofore described as "Acryloid" impact modifiers.

## DETAILED DESCRIPTION OF THE INVENTION

The aromatic polyester used in this invention is obtained from terephthalic acid and/or isophthalic acid and/or functional derivatives thereof and a bisphenol of the following general formula (I)

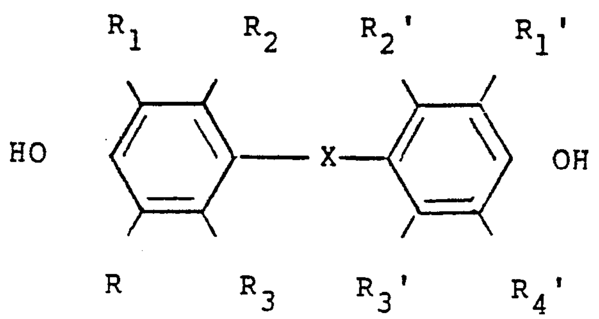

(I)

wherein -X- is selected from the group consisting of -O-, -S-, $-SO_2-$, -SO-, -CO-, an alkylene group containing 1 to 4 carbon atoms, and an alkylidene group containing 1 to 4 carbon atoms, and $R_1$, $R_2$, $R_3$, $R_4$, $R_1'$, $R_2'$, $R_3'$, and $R_4'$, which may be the same or different, each is selected from the group consisting of a hydrogen atom, a chlorine atom, a bromine atom and an alkyl group containing 1 to 4 carbon atoms, or functional derivatives thereof.

A mixture of about 90 to about 10 mole % of terephthalic acid and/or a functional derivative thereof and about 10 to about 90 mole % of isophthalic acid and/or a functional derivative thereof is preferred for use as the acid component to be reacted with the bisphenol to prepare the aromatic polyester as referred to in this invention. Preferably, a mixture of 20 to 80 mole % of terephthalic acid and/or a functional derivative thereof and 80 to 20 mole % of isophthalic acid and/or a functional derivative thereof is used. The molar ratio of bisphenol to the sum of the terephthalic acid units and isophthalic acid units is substantially equimolar.

Suitable functional derivatives of terephthalic or isophthalic acid which can be used include acid halides, dialkyl ester and diaryl esters. Preferred examples of acid halides include terephthaloyl dischloride, isophthaloyl dichloride, terephthaloyl dibromide and isophthaloyl dibromide. Preferred examples of dialkyl esters include dialkyl esters of terephthalic and isophthalic acids containing 1 to 6 (especially 1 to 2) carbon atoms in each alkyl moiety thereof. Preferred examples of diaryl esters include diphenyl terephthalate and diphenyl isophthalate.

Examples of suitable bisphenols of the general formula (I) above are 4,4′-dihydroxy-diphenyl ether, bis(4-hydroxy-2-methylphenyl) ether, bis(4-hydroxy-3-chlorophenyl) ether, bis(4-hydroxyphenyl) sulfide, bis(4-hydroxyphenyl) sulfone, bis(4-hydroxyphenyl) ketone, bis(4-hydroxyphenyl)methane, bis(4-hydroxy-3-methylphenyl)methane, bis(4-hydroxy-3,5-dichlorophenyl)methane, bis(4-hydroxy-3,5-dibromophenol)methane, 1,1-bis(4′-hydroxyphenyl)ethane, 2,2-bis(4′-hydroxy-3′-methylphenyl)propane, 2,2-bis(4′-hydroxy-3′-chlorophenyl (propane, 2,2-bis(4′-hydroxy-3′, 5′-dichlorophenyl)propane, 2,2-bis(4′-hydroxy-3,5′-dibromophenyl)propane, and 1,1-bis(4′-hydroxyphenyl)-n-butane. 2,2-bis(4′-hydroxyphenyl)propane, Bisphenol

A, is most typical and is readily available, and, accordingly, is most often used.

Typical examples of functional derivatives of bisphenols which can be used are the metal salts thereof and the diesters thereof with aliphatic monocarboxylic acids containing 1 to 3 carbon atoms. Preferred functional derivatives of the bisphenols are the sodium salts, the potassium salts, and the diacetate esters thereof. The bisphenols may be used either alone or as a mixture of two or more thereof.

Any known method can be used to produce these aromatic polyesters. Thus, the interfacial polymerization method which comprises mixing a solution of an aromatic dicarboxylic acid chloride in a water-immiscible organic solvent with an alkaline aqueous solution of bisphenol, the solution polymerization method which comprises heating a bisphenol and an acid chloride in an organic solvent, and the melt polymerization method which comprises heating a phenyl ester of an aromatic dicarboxylic acid and bisphenol, which are described in detail in U.S. Pat. Nos. 3,884,990, and 3,946,091, can, for example, be employed.

In order to insure the aromatic polyesters have good physical properties they should have an intrinsic viscosity (IV) of about 0.3 to about 1.0, preferably 0.4 to 0.8, determined in 1,1,2,2-tetrachloroethane at 30°C.

Typically the polymerization process is carried out in the presence of an acidic, neutral or basic catalyst, such classifications being based on the reaction of a conventional acid base indicator and the catalyst when the latter is dissolved in a polar ionizing solvent such as water. More preferably, a basic catalyst is employed. Prior to its introduction into the reaction mass, the preferred basic catalyst is preferably converted to liquid form, e.g. by melting or by dissolution in a liquid or normally solid, low melting solvent. Suitable basic catalysts include the alkali metals, such as lithium, sodium, potassium, rubidium, cesium and francium and the carbonates, hydroxides, hydrides, borohydrides, phenates, bisphenates, (i.e. salt of a bisphenol or bisphenol), carboxylates such as acetate or benzoate, oxides of the foregoing alkali metals. Group II and III elements can also be used in place of the alkali metals of the foregoing classes of compounds such as metals and compounds of calcium, magnesium and aluminum. Other bases include trialkyl or triaryl tin hydroxides, acetates, phenates, and the like. Examples of catalysts are lithium, sodium, potassium, rubidium, cesium and francium metals, potassium or rubidium carbonate, potassium hydroxide, lithium hydride, sodium borohydride, potassium borohydride, calcium acetate, magnesium acetate, aluminum triisopropoxide and triphenyl tin hydroxide.

Phenol is the preferred solvent for the normally solid catalysts. Substituted phenols which can be used include those having the formula

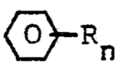

wherein R is alkyl of 1 to 10 carbon atoms, alkoxy of 1 to 10 carbon atoms, aryl of 6 to 10 carbon atoms, chloro, bromo or mixtures thereof, and wherein n is 1 or 2. Typical solvents include o-benzyl phenol, o-bromo phenol, m-bromo phenol, m-chloro phenol, p-chloro phenol, 2,4 dibromo phenol, 2,6 dichloro phenol, 3,5 dimethoxy phenol, o-ethoxy phenol, m-ethyl phenol, p-ethyl-phenol, o-isopropyl phenol, m-methoxy phenol, m-propyl phenol, p-propyl phenol, and the like. Other solvents which are particularly useful are of the ether type, for example, tetrahydrofuran and the various glymes, for examples, ethylene glycol dimethylether and the like.

Especially preferred liquid basic catalysts are charged dissolved in a molten normal solid-low melting organic solvent such as phenol. Especially preferred catalysts providing excellent results are the basic catalysts, rubidium phenoxide, potassium phenoxide, and potassium borophenoxide, each dissolved in molten phenol.

In accordance with conventional reaction practice, a catalytically effective amount of the catalyst is employed, for example, about 0.005 to about 2 mol percent or more, preferably about 0.01 to 1 mole percent of the bisphenol in accordance with known techniques of polyester formation.

While any of the known processes can be employed in synthesizing the polyarylates useful in this invention, conditions which are conventional for melt polymerization are especially preferred. According to the conventional practice, the solid reactants are heated above about 100°C, preferably above about 160°C to melt the reactants. Onset of reaction in the presence of catalyst is generally at a temperature ranging from about about 100°C to about 275°C, for example, above about 160°C for reaction of Bisphenol A, diphenyl terephthalate and diphenyl isophthalate. The reaction temperature employed is generally above about 100°C to about 400°C or higher, preferably above about 175°C to about 350°C, more preferably about 175°C to about 330°C with the reaction temperature being raised gradually during the polymerization. In the reaction, the aryl group of the diester is displaced as the corresponding relatively volatile monohydroxy aromatic compound, e.g. phenol, for which provision is made for removal e.g. by distillation from the reaction mixture during the transesterification. Reaction pressure is generally diminished during the reaction, e.g. of about 0.1 mm. of mercury or lower, to aid in the aforementioned removal of the monohydroxy aromatic compound.

Generally, it is preferable in accordance with the prior art to carry out reaction in two stages. The first or prepolymerization stage is carried out at above about 100°C to about 350°C preferably about 160°C to about 330°C, especially about 180°C to about 300°C to prepare a low molecular weight polyester or prepolymer of relatively low intrinsic viscosity, e.g. of less than about 0.1 to about 0.3 dl./g. A subsequent polymerization stage is then carried out in which the prepolymer is heated at a somewhat higher temperature namely, at above about 200°C to about 400°C or higher, preferably at about 225°C to about 350°C, especially at about 275°C to about 330°C. Conveniently, the polymerization stage is carried out in a different reaction vessel from that

employed in the prepolymerization reaction stage with effective agitation of reaction mixture in both stages with generally more extreme agitation being used in the polymerization.

In carrying out the melt polymerization, it is preferred prior to catalyst addition to melt the normally solid reactants to provide molten reactants and then heat the reactants if necessary to a temperature sufficient for onset of polymerization. According to this embodiment, a basic catalyst for the polymerization that is normally solid at 30° C is then introduced in the liquid form to the polymerization concurrent with the molten reactants.

The polyesters which are suitable for use herein are derived from an aliphatic or cycloaliphatic diol, or mixtures thereof, containing from 2 to about 10 carbon atoms and at least one aromatic dicarboxylic acid. The polyesters which are derived from an aliphatic diol and an aromatic dicarboxylic acid have repeating units of the following general formula:

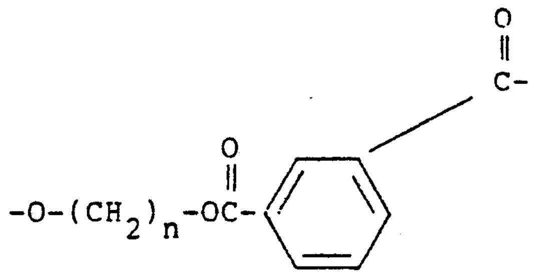

(II)

wherein n is an integer of from 2 to 4.

The preferred polyester is poly(ethylene terephthalate) or poly(butylene terephthalate).

The polyesters which are derived from a cycloaliphatic diol and an aromatic dicarboxylic acid are prepared by condensing either the cis- or trans-isomer (or mixtures thereof) of, for example, 1,4-cyclohexanedimethanol with the aromatic dicarboxylic acid so as to produce a polyester having recurring units having the following formula:

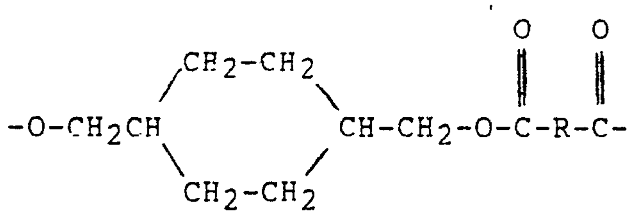

(III)

wherein the cyclohexane ring is selected from the cis- and trans-isomers thereof and R represents an aryl radical containing 6 to 20 carbon atoms and which is the decarboxylated residue derived from an aromatic dicarboxylic acid.

Examples of aromatic dicarboxylic acids indicated by R in formula II, include isophthalic or terephthalic acid, 1,2-di(p-carboxyphenyl) ethane, 4,4′-dicarboxyldiphenyl ether, etc., and mixtures of these. All of these acids contain at least one aromatic nucleus. Fused rings can also be present such as in 1,4- or 1,5-naphthalene-dicarboxylic acids. The preferred dicarboxylic acids is terephthalic acid or mixtures of terephthalic and isophthalic acid.

Thus, the polyester may be derived from the reaction of either the cis- or trans-isomer (or a mixture thereof) of 1,4-cyclohexanedimethanol with a mixture of iso- and terephthalic acids. Another preferred polyester is a copolyester derived from a cyclohexane dimethanol, an alkylene glycol and an aromatic dicarboxylic acid. These copolyesters are prepared by condensing either the cis- or trans-isomer (or mixtures thereof), of, for example, 1,4-cyclohexanedimethanol and an alkylene glycol with an aromatic dicarboxylic acid so as to produce a copolyester having repeating units of the following formula:

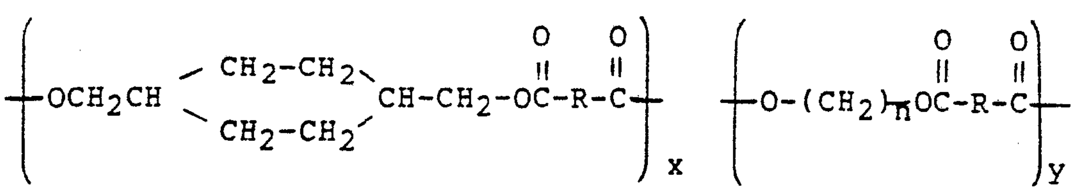

(IV)

wherein the cyclohexane ring is selected from the cis- and trans-isomers thereof, R is as previously defined, n is an integer of 2 to 4, and x units comprise from about 10 to about 90 percent by weight and the y units comprise from about 10 to about 90 percent by weight. Such a copolyester may be derived from the reaction of either the cis- or trans-isomer (or mixtures thereof) of 1,4-cyclohexanedimethanol and ethylene glycol with

terephthalic acid.

The polyarylates and polyesters are combinable with each other in all proportions. The polyarylate is used in amounts of from about 10 to about 85 weight percent, preferably from about 20 to about 80 weight percent and most preferably from about 30 to about 70 weight percent. Reciprocal amounts of polyester are utilized.

The impact modifier suitable for use in this invention is a graft copolymer of a vinyl aromatic, an acrylate, an unsaturated nitrile, or mixtures thereof, grafted onto an unsaturated elastomeric backbone comprising EPDM elastomers.

The unsaturated elastomeric backbone is EPDM elastomer comprising a copolymer of ethylene, propylene and a diene containing 4 to 10 carbon atoms. The $C_4$-$C_{10}$ dienes contain isolated double bonds. The copolymer contains about 48 to about 77 % by weight ethylene, about 23 to about 52 weight % propylene, and about 2.5 to about 9.8 % of the diene monomer.

The constituents which are grafted onto the unsaturated elastomeric backbone are selected from a vinyl aromatic, such as styrene, alphamethylstyrene, alkylstyrene, or mixtures thereof; an acrylate such as the acrylic ester monomers, such as methyl acrylate, ethyl acrylate, butyl acrylate, methyl methacrylate, or mixtures thereof, an unsaturated nitrile such as acrylonitrile, methacrylonitrile, or mixtures thereof. It will be understood that the vinyl aromatic, acrylate and acrylonitrile may be used individually or in any combinations in grafting onto the unsaturated elastomeric backbone.

The grafted constituents of the impact modifier will comprise from about 10 to about 70 % by weight of the impact modifier.

A preferred impact modifier comprises a blend of an SAN grafted EPDM rubber such as described above and an SAN copolymer comprised of the vinyl aromatic, acrylate and unsaturated nitrile constituents previously described. A particularly preferred impact modifier comprises "Rovel 401" manufactured by Dow Chemical Co., Midland, Michigan. This particular commercial product comprises 20-50 weight % of a SAN grafted EPDM copolymer, 49-79 weight % of a SAN copolymer, and the balance including colorants and stabilizers.

The composition of this invention contains from about 5 to about 70 weight % of the impact modifier, preferably, from about 10 to about 70 weight % and, more preferably, from about 10 to about 20 weight %, based on the total weight of the composition.

In another preferred embodiment of the present invention, a polyarylate molding composition having improved impact performance is provided by a four component blend comprising a polyarylate, a polyester as above defined, an impact modifier comprising the EPDM elastomeric backbone as described above and less than about 10 % by weight of an additional impact modifier for improving Izod impact values.

The additional impact modifier used in accordance with the invention is a multiphase composite interpolymer comprising 25 to 95 weight percent of a first elastomeric phase and 75 to 5 weight percent of a final rigid thermoplastic phase. One or more intermediate phases are optional, e.g., a middle stage polymerized from 75 to 100 percent by weight of styrene may be incorporated.

The first stage is polymerized utilizing 75 to 99.8 weight percent $C_1$ to $C_6$ alkyl acrylate, generally resulting in an acrylic rubber core having a $T_g$ below 10°C, and cross-linked with 0.1 to 5 weight percent cross-linking monomer and further containing 0.1 to 5 weight percent graftlinking monomer. The preferred alkyl acrylate is butyl acrylate.

The cross-linking monomer is a polyethylenically unsaturated monomer having a plurality of additional polymerizable reactive groups, all of which polymerize at substantially the same rate of reaction. Suitable cross-linking monomers include polyacrylic and methacrylic esters of polyols such as butylene diacrylate and butylene dimethacrylate, trimethylolpropane trimethacrylate and the like; di- and trivinyl benzene, vinyl and the like. The preferred cross-linking monomer is butylene diacrylate.

The graftlinking monomer is a polyethylenically unsaturated monomer having a plurality of additional polymerizable reactive groups, at least one of the reactive groups polymerizing at a substantially different rate of polymerization from at least one other of said reactive groups. The function of the graftlinking monomer is to provide a residual level of unsaturation in the elastomeric phase, particularly in the latter stages of polymerization and, consequently, at or near the surface of the elastomeric particles. When the rigid thermoplastic phase is subsequently polymerized at the surface of the elastomer, the residual unsaturated additional polymerizable reactive groups contributed by the graftlinking monomer participate in the subsequent reaction so that at least a portion of the rigid phase is chemically attached to the surface of the elastomer. Among the effective graftlinking monomers are allyl groups containing monomers such as allyl esters of ethylenically unsaturated acids, e.g. allyl acrylate, allyl methacrylate, diallyl maleate, diallyl fumarate, diallyl itaconate, allyl acid maleate, allyl acid fumarate and allyl acid itaconate. Somewhat less preferred are the diallyl esters of polycarboxylic acids which do not contain polymerizable unsaturation. The preferred graftlinking monomers are allyl methacrylate and diallyl maleate.

The final stage can be polymerized from a monomer system comprising $C_1$ to $C_{16}$ alkyl methacrylate, styrene, acrylonitrile, alkyl acrylates, allyl methacrylate, diallyl methacrylate and the like, as long as the overall $T_g$ is at least 20°C. Preferably the final stage monomer system is at least 50 weight percent of a $C_1$ to $C_4$ alkyl acrylate.

A most preferred interpolymer has only two stages. The first stage, about 60 to 95 weight percent of the interpolymer, is polymerized from a monomer system comprising 95 to 99.8 weight percent butyl acrylate, 0.1 to 2.5 weight percent butylene diacrylate as the cross-linking agent and 0.1 to 2.5 weight percent allyl

methacrylate or diallyl maleate as the graftlinking monomer. The final stage of the interpolymer is polymerized from 5 to 40 weight percent methyl methacrylate.

The most preferred multiphase composite interpolymer is commercially available from Rohm and Haas and is designated as Acryloid KM-330®.

The compositions of this invention are prepared by any conventional mixing method. For example, a preferred method comprising mixing the polyarylate, polyester and impact modifier in powder or granular form in an extruder and extruding the mixture into strands, chopping the strands into pellets and molding the pellets into the desired article.

It should, of course, be obvious to those skilled in the art that other additives may be included in the present compositions. These additives include plasticizers, pigments, flame retardant additives reinforcing agents, such as glass fibers, thermal stabilizers, processing aids, and the like.

The compositions of this invention have utility in a wide variety of applications. The improved impact compositions can be molded into sheets, film, fibers, etc.

EXAMPLE 1

A ternary blend comprising 40 wt.% polyarylate (Durel, sold by Celanese Corporation and prepared from Bisphenol A and a mixture of 25 mole percent diphenyl terephthalate and 75 mole percent diphenyl isophthalate); 40 wt.% polybutylene terephthalate (PBT); and 20 wt.% of an EPDM-based impact modifier (Rovel 401, sold by Dow Chemical and comprising a SAN grafted EPDM rubber and SAN blend) was prepared by drying all ingredients as necessary and extruding the blend of ingredients in a 28 mm ZSK twin screw extruder manufactured by Werner and Pfleiderer, Ramsey, N.J. An extrusion stock temperature of about 285° C was maintanied. The pellitized extruder outputs were thoroughly dried and injection molded into ASTM test specimens on a 2 ounce Arbury molding machine at a stock temperature of about 300° C.

The above composition and a control comprising of equal amounts of Durel and PBT were tested for impact, flexural and mechanical properties.

The test specimens were measured for the following properties: tensile strength according to ASTM D-638, elongation at break according to ASTM D-638, flexural strength and modulus according to ASTM D-790. Notched Izod impact strength was measured according to ASTM D-256. Rheometric drop weight was measured according to the following process:

Practical impact measurements were conducted using a high speed Drop Weight Tester manufactured by Rheometrics, Piscataway, N.J. The instrument employs a 1/2 in. diameter hemispherical part to penetrate against a 2 in. by 1/8 in. thickness disc placed over a 1-1/4 in. diameter ring at a velocity of 7-1/2 miles per hour. The temperature of the test chamber can also be varied.

At the end of each test, the peak force and total energy required to penetrate the sample disc is recorded. If the dart punctures through the specimen without cracking, it is described as ductile failure, otherwise a brittle failure.

The results are shown in Table 1.

TABLE 1

| Composition | DUREL 40% PBT 40% ROVEL 20% | DUREL 50% PBT 50% |
|---|---|---|
| **Tensile** | | |
| Tensile Stress @ Yield Psi | 8548 | 9508 |
| Tensile Stress @ Break Psi | 5789 | 6042 |
| Elongation @ Break % | 128.33 | 90.3 |
| **Flexural** | | |
| Flex Stress @ 5% Strain KPsi | 12.6 | 13.6 |
| Flex Modulus KKPsi | 0.345 | 0.343 |
| **Impact** | | |
| Notched Izod, 1/8" Ft-lbs/inch Notch | | |
| 24°C | 2.60 | 1.09 |
| Rheometric Drop Weight 2" by 1/8" Disc Peak Force, lbs | | |
| 24°C | 815 (Ductile) | 951 (Ductile |
| 0 °C | 881.8 (Ductile) | 69 (Brittle) |
| -20°C | 937 (Ductile) | |
| -30°C | 999.4 (Ductile) | |
| -40°C | 781 (Brittle) | |
| Rheometric Drop Weight 2" by 1/8" Disc Total Energy, in-lbs | | |
| 24°C | 393.0 | 422.0 |
| 0 °C | 380.8 | 1.6 |
| -20°C | 359.4 | |
| -30°C | 378.8 | |
| -40°C | 319.6 | |

As can be seen from Table 1 in the composition within the scope of the present invention, both the peak force and total impact energy are retained down to -30°C. The control changes over from the desirable ductile failure mode to brittle failure at 0°C, and thus greatly reduces the peak force and impact values.

EXAMPLE 2

Various ternary blends of Durel polyarylate, PBT and Rovel 401 EPDM-based impact modifier as in Example 1 were formed into test samples according to the procedure of Example 1. The samples were tested for various physical properties. The various compositions (weight ratios) and results of testing are tabulated in Table 2.

TABLE 2

| | Polyarylate/PBT/Impact Modifier | | | | | | | | | |
|---|---|---|---|---|---|---|---|---|---|---|
| | 1/0/0 | 0/1/0 | 0/0/1 | 1/1/0 | 1/0/1 | 0/1/1 | 1/1/1 | 4/1/1 | 1/4/1 | 1/1/4 |
| **Tensile** | | | | | | | | | | |
| Tensile Stress @ Yield Psi | 10280 | 8014 | 6244 | 9508 | 8494 | 7032 | 8062 | 9949 | 7508 | 7333 |
| Tensile Stress @ Break Psi | 9256 | 4881 | 4799 | 6042 | 6936 | 6155 | 5528 | 7740 | 4511 | 5284 |
| Elongation @ Break % | 13.7 | 303.0 | 44.3 | 90.3 | 32.8 | 10.6 | 23.9 | 18.2 | 122.6 | 12.6 |
| **Flexural** | | | | | | | | | | |
| Flex Stress @ 5% Strain KPsi | 13.7 | 11.8 | | 13.6 | 12.2 | 10.5 | 11.7 | 13.8 | 10.8 | 10.5 |
| Flex Modulus KKPsi | 0.333 | 0.358 | 0.316 | 0.343 | 0.337 | 0.313 | 0.327 | 0.348 | 0.309 | 0.316 |

TABLE 2 (Continued)

| Impact | 1/0/0 | 0/1/0 | 0/0/1 | 1/1/0 | 1/0/1 | 0/1/1 | 1/1/1 | 4/1/1 | 1/4/1 | 1/1/4 |
|---|---|---|---|---|---|---|---|---|---|---|
| Notched Izod 1/8" Ft-lbs/inch Notch 24°C | 4.36 | 0.80 | 12.95 | 1.09 | 1.43 | 1.11 | 1.96 | 1.88 | 1.48 | 11.21 |
| Rheometric Drop Weight 2" by 1/8 Disc Peak Force lbs 24°C | 1287 | 756 | 654 | 951 | 373 | 762 | 815 | 517 | 778 | 759 |
| Rheometric Drop Weight 2" by 1/8" Disc Total Energy in-lbs 24°C | 328 | 334 | 262 | 422 | 39 | 289 | 349 | 177 | 327 | 296 |
| Rheometric Drop Weight 2" by 1/8 Dis Mode of Failure 24°C | B | D | D- | D | B | D | D | B | D | D |

(Note: B-Brittle, D-Ductile)

A further examination of Tables 1 and 2 reveals that the ternary blends are notch sensitive except when the Rovel impact modifier becomes the major ingredient.

EXAMPLE 3

A blend of the polyarylate, PBT and Rovel impact modifier as in Examples 1 and 2 was further mixed with "Acryloid KM-330" which is the acrylate multiphase composite interpolymer discussed previously. This tetrablend was compared with two other tetrablends containing the same blend of polyarylate, PBT and Rovel impact modifier. The only difference was that in one sample the additional impact modifier was "Acryloid KM-653" which is a methacrylated butadiene-styrene copolymer from Rohm and Haas, and in the other comparative sample "Blendex 586" which is a glassy poly(alpha methylstyrene-styrene-acrylonitrile) modifier manufactured by Borg-Warner Chemicals, Inc. was used. The blends were prepared into test samples as in Example 1. The results are shown in Table 3. The addition of a small amount of Acryloid KM-330 as a second impact modifier greatly improved the notched izod value of the sample while still maintaining excellent practical impact. On the other hand, no improvement in izod impact is noticed with the inclusion of Blendex 586 as a second impact modifier.

TABLE 3

| | DUREL 40% PBT 33.4% ROVEL 20% KM-653 6.6% | DUREL 40% PBT 33.4% ROVEL 20% KM-330 6.6% | DUREL 40% PBT 33.4% ROVEL 20% BLENDEX 586 6.6% |
|---|---|---|---|
| **Tensile** | | | |
| Tensile Stress @ Yield Psi | 7598 | 7460 | 8112 |
| Tensile Stress @ Break Psi | 5222 | 5543 | 5400 |
| Elongation @ Break % | 80.5 | 179.2 | 13.4 |
| **Flexural** | | | |
| Flex Stress @ 5% Strain KPsi | 11.3 | 10.8 | 11.9 |
| Flex Modulus KKPsi | 321 | 0.312 | 3.53 |

TABLE 3 (Continued)

| | DUREL 40%<br>PBT 33.4%<br>ROVEL 20%<br>KM-653 6.6% | DUREL 40%<br>PBT 33.4%<br>ROVEL 20%<br>KM-330 6.6% | DUREL 40%<br>PBT 33.4%<br>ROVEL 20%<br>BLENDEX 586 6.6% |
|---|---|---|---|
| **Impact** | | | |
| Notched Izod, 1/8" Ft-lbs/inch Notch 24°C | 3.03 | No Break | 1.10 |
| Rheometric Drop Weight 2" by 1/8" Disc Peak Force, lbs 24°C | | 739.7(Ductile) | |
| Rheometric Drop Weight 2" by 1/8" D. c Total Energy, in-lbs 24°C | | 316.3 | |

## Claims

1. A polyarylate molding composition having improved impact properties comprising in admixture: a polyarylate derived from a dihydric phenol and an aromatic dicarboxylic acid; a polyester derived from an aliphatic or cycloaliphatic diol, or mixtures thereof, and an aromatic dicarboxylic acid; and an impact modifier which comprises an EPDM elastomer.

2. The composition of claim 1 wherein said polyarylate is derived from a dihydrid phenol or a mixture of dihydric phenols, said dihydric phenol having the structural formula:

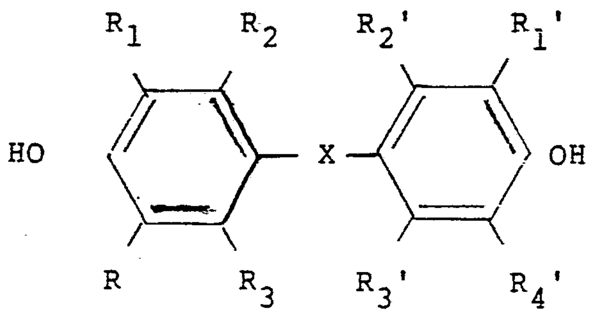

wherein -X- is selected from the group consisting of -O-, -S-, $-SO_2-$,-SO-, -CO-, an alkylene group containing 1 to 4 carbon atoms, and an alkylidene group containing 1 to 4 carbon atoms, and $R_1$, $R_2$, $R_3$, $R_4$, $R_1'$, $R_2'$, $R_3'$, and $R_4'$, which may be the same or different, each is selected from the group consisting of a hydrogen atom, a chlorine atom, a bromine atom and an alkyl group containing 1 to 4 carbon atoms, or functional derivatives thereof.

3. The composition of claim 2 wherein the polyarylate is derived from Bisphenol A and an aromatic dicarboxylic acid.

4. The composition of claim 1 wherein the polyarylate is derived from a dihydric phenol and terephthalic acid or a functional derivative thereof or isophthalic acid or a functional derivative thereof, or mixtures thereof.

5. The composition of claim 1 wherein said polyester is derived from an aliphatic diol and an aromatic dicarboxylic acid.

6. The composition of claim 5 wherein the polyester is polyethylene terephthalate or polybutylene terephthalate.

7. The composition of claim 5 wherein the polyester is polybutylene terephthalate.

8. The composition of claim 1 wherein said polyester is present in amounts of about 30 to about 70 wt.% based on the mixture of polyarylate and polyester.

9. The composition of claim 1 wherein said impact modifier comprises from about 10 to about 70 wt.% based on the total weight of the composition.

10. The composition of claim 1 wherein said impact modifier comprises a graft copolymer of a vinyl aromatic, an acrylate and an unsaturated nitrile grafted onto an EPDM elastomer, said graft copolymer being blended with a copolymer of a vinyl aromatic, an acrylate and an unsaturated nitrile.

11. The composition of claim 1 further including less than about 10% by weight based on the total weight of the composition of a multiphase interpolymer comprising:

(i) from 25 to 95 percent, by weight based on the total weight of the interpolymer, of a first elastomeric phase polymerized from a monomer system comprising from 75 to 99.8 percent by weight, based on the first elastomeric phase, of a $C_1$ to $C_6$ alkyl acrylate, from 0.1 to 5 percent by weight of a cross-linking monomer, which is a polyethylenically unsaturated monomer, with a plurality of addition polymerizable reactive groups and from 0.1 to 5 percent by weight of a graft-linking monomer having a plurality of addition polymerizable reactive groups; and

(ii) from 75 to 5 percent by weight, based on the total weight of the interpolymer, of a final rigid thermoplastic phase polymerized in the presence of the elastomeric.

12. The composition of claim 11 wherein said polyarylate comprises from about 30 to about 70 wt.% of the mixture of polyarylate and polyester.

13. The composition of claim 12 wherein said polyester comprises about 30 to about 70 wt.% of the mixture of polyarylate and polyester.

14. The composition of claim 13 wherein said EPDM impact modifier comprises about 10 to about 30 wt.% of the composition, said composition further comprising up to 10 wt.% of said multiphase interpolymer.

15. A fiber having the composition of claim 1.

16. A fiber having the composition of claim 11.
17. A film having the composition of claim 1.
18. A film having the composition of claim 11.
19. A molded article having the composition of claim 1.
20. A molded article having the composition of claim 11.